# EUROPEAN PATENT APPLICATION

(11) **EP 4 656 934 A2**
(43) Date of publication of application: **03.12.2025**
(21) Application number: 25210133.2
(22) Date of filing: 14.05.2021
(51) Int. Cl.: F17C 13/12

(54) **EMERGENCY COOLING SYSTEM FOR VEHICLES**

(30) Priority: 15.05.2020 IT 202000011233
(62) Divisional of application: 21173925.5
(71) Applicant: IVECO S.P.A., 10156 Torino (IT)
(72) Inventor: AIMO BOOT, Marco, 10156 Torino (IT)
(74) Representative: Studio Torta S.p.A.

(57) **Abstract**

Vehicle (1) comprising a frame (2) carried movable with respect to the ground through a plurality of wheels (3) and provided with at least one storage system (4) for a combustible gas suitable for being used by a propulsion system of the vehicle (1) to allow its movement, the vehicle comprising an emergency system (7) comprising a source (9) of cooling fluid, diffuser means (10) and pumping means (11), the latter being configured to pump the fluid from the source (9) and send it, pressurized, to the diffuser means (10), these diffuser means (10) being configured to generate a shield of refrigerant fluid around the storage system (4), the pumping means (11) automatically activate if there is a temperature rise in a predetermined area (8) of the vehicle greater than a threshold temperature and / or an impact of said vehicle (1) is detected.

## Description

### TECHNICAL FIELD

This invention relates to an emergency system for a vehicle, in particular an emergency cooling system for a vehicle powered by fuel in a gaseous state or other propellants whose containers may need cooling in an emergency in order to contain potential damage to property and persons.

### STATE OF THE PRIOR ART

As is well known, there is an increasing need to reduce the environmental impact of land transport vehicles, especially heavy ones such as lorries, light commercial vehicles (or LCVs), or transport vehicles, or special vehicles (e.g., fire-fighting or military vehicles).

To this end, alternative fuels such as gas, liquefied natural gas (LNG), or compressed natural gas (CNG), which can be used in internal combustion engines, or hydrogen, which can be used in fuel-cell engines, are increasingly used.

In the case of both gas and hydrogen vehicles, the fuel is normally housed in tanks, i.e. pressurised cylinders, carried by the vehicle itself and made of steel or composite material to allow them to hold at high pressure, for example a pressure greater than 100 bar.

However, it is known that hydrogen is an extremely volatile and light element that is highly reactive with other elements in the atmosphere, mainly oxygen. In fact, hydrogen is considered to be an element with a wide flammability range when it is free in the environment. Similarly, it is known that the gas is susceptible to explosion.

In the event of an accident involving a vehicle comprising a pressurised gas or hydrogen tank, a fire may develop that could cause the tank to explode and/or spread the fire to the rest of the vehicle, resulting in damage to property or injury to people in the immediate area. As an example, suffice to say that a tank containing 2 kg of hydrogen can develop an explosion capacity of 6 MJ.

Therefore, there is a need to provide emergency systems that can be activated in dangerous situations with respect to pressurised gas/hydrogen tanks in order to avoid an explosion.

The purpose of this invention is to fulfil the above requirements in an optimal and economical manner.

### SUMMARY OF THE INVENTION

Said purpose is achieved with a vehicle provided with an emergency system, a system comprising this vehicle and a cooling method as claimed in the attached independent claims.

Additional, preferred embodiments of the invention are produced according to the dependent claims or the claims related to the above-mentioned independent claims.

### BRIEF DESCRIPTION OF THE DRAWINGS

In order to better understand this invention, a preferred embodiment thereof will now be described by way of nonlimiting example and with reference to the accompanying drawings, in which:
- Figure 1 illustrates a schematic top view, with parts removed for clarity, of a vehicle comprising an emergency system according to this invention;
- Figure 2 illustrates a schematic view in cross-section of a part of the emergency system according to line II-II in Figure 1; and
- Figure 3 illustrates a diagram of an emergency system control method according to this invention.

### DETAILED DESCRIPTION OF THE INVENTION

The reference number 1 generically denotes a land transport vehicle 1 on wheels essentially provided with a frame 2 defining a support structure for other vehicle elements, such as a cab or body, not illustrated, and the wheels 3. Clearly, this application refers to a land vehicle on wheels for simplicity, but a similar technical solution can be adopted for other means of naval or railway transport.

In particular, the vehicle 1 comprises at least one storage system 4 for a pressurised fluid, such as gas, for example LNG (Liquid Natural Gas) or CNG (Compressed Natural Gas), or hydrogen. This storage system 4 is fluidically connected to a propulsion system, such as an internal combustion engine or fuel-cell engine of the vehicle 1, not illustrated, and configured to use the gas/hydrogen contained in the storage system 4 to convert the gas/hydrogen into mechanical, thermal, or electrical energy as required by the vehicle 1.

In the case described, the vehicle 1 comprises a pair of storage systems 4, left and right respectively, carried externally with respect to the frame 2 of the vehicle 1.

Advantageously, each storage system 4 comprises at least one tank 5 configured to contain the pressurised gas/hydrogen and made of different materials suitable for the purpose, such as metallic or composite materials. Each tank 5 is obviously fluidically connected to the propulsion system, as briefly mentioned above, by means of known hydraulic systems, which are not described any further herein for brevity.

According to the described embodiment, each storage system 4 comprises a pair of tanks 5 rigidly connected to each other and to the frame 2, for example using suitable brackets 6. Again relative to what is illustrated by way of example, the tanks 5 each extend along a longitudinal axis A parallel to a longitudinal axis B of the vehicle 1.

According to the invention, the vehicle 1 comprises an emergency system 7 configured to activate if an area 8 of the vehicle has a temperature above a predetermined threshold temperature or an incidental event is detected by the vehicle control systems, to cool, in a targeted way, a storage system 4, i.e., in the example described, the tanks 5.

Advantageously, the emergency system 7 comprises: a source 9 of cooling fluid, such as water or another extinguishing element, or a mixture thereof with water; diffuser means 10 configured to sprinkle this cooling fluid on the storage system 4; and pumping means 11 configured to draw the cooling fluid from the source 9 and send it, pressurised, to the diffuser means 10.

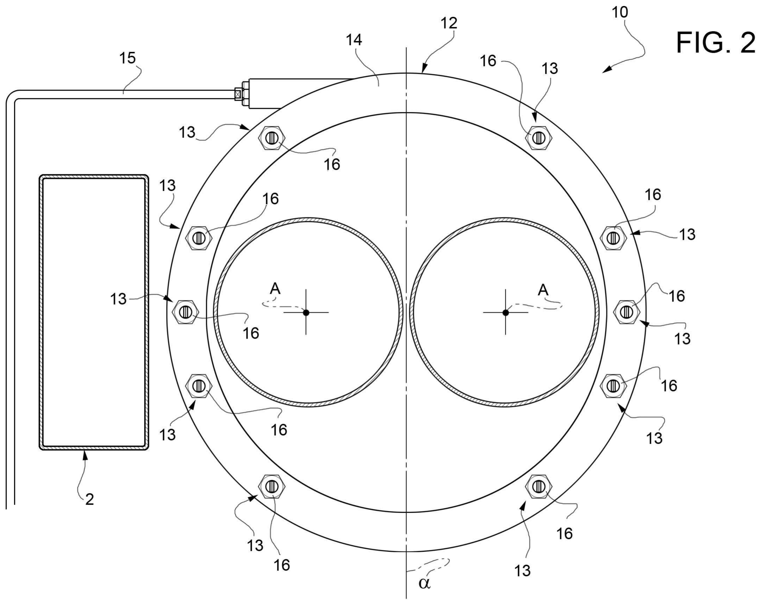

More specifically, as illustrated in Figure 2, the diffuser means 10 comprise an annular element 12, fluidically connected to the pumping means 11 and configured to radially surround the storage system 4, i.e. in the case described the pair of tanks 5, and defining a number of openings 13 configured to enable the escape of the cooling fluid towards the tanks 5.

Advantageously, the annular element 12 is placed at a longitudinal end of the tank 5 and the openings 13 are all positioned on the same side of the annular element 12 and are made, each, with the axis parallel to the axis A of the tanks 5 so that the fluid is sprinkled along the entire length of each tank 5, i.e., towards the opposite end of the tank 5 with respect to the end where the annular element 12 is housed without creating any interference to known safety valves placed at the end of each cylinder.

According to the advantageous embodiment described, the annular element 12 is a single element, basically a cylindrical ring 14, having a radius greater than the sum of the diameters of the tanks 5 comprised in the storage system 4 and, advantageously, coaxial with them.

This cylindrical ring 14 is fluidically connected via a pipe 15 to the pumping means 11 and is advantageously hollow to allow fluidic connection between each opening 13 and the fluid coming from the pipe 15. In this way, the fluid coming from the pipe 15 can flow through the body of the cylindrical ring 14 into the external environment via the openings 13.

Advantageously, the openings 13 are placed symmetrically with respect to a longitudinal plane α of the storage system 4 and angularly circumferentially closer to each other in the lateral portions (i.e. the portions closest and furthest away from the frame 2, respectively) than the remaining axial portions of the element 12.

Advantageously, each opening 13 is equipped with a nozzle 16 configured to direct and diffuse the flow of the cooling fluid over the tank 5. Each nozzle 16 is preferably a flat-jet nozzle and each nozzle 16 is preferably positioned so that the respective cooling fluid outflow slit is parallel to the longitudinal plane α.

The type of nozzles can be adapted according to the propellant tank or cylinders in order to accommodate alternative installations and/or a different length or conformation of the cooling elements.

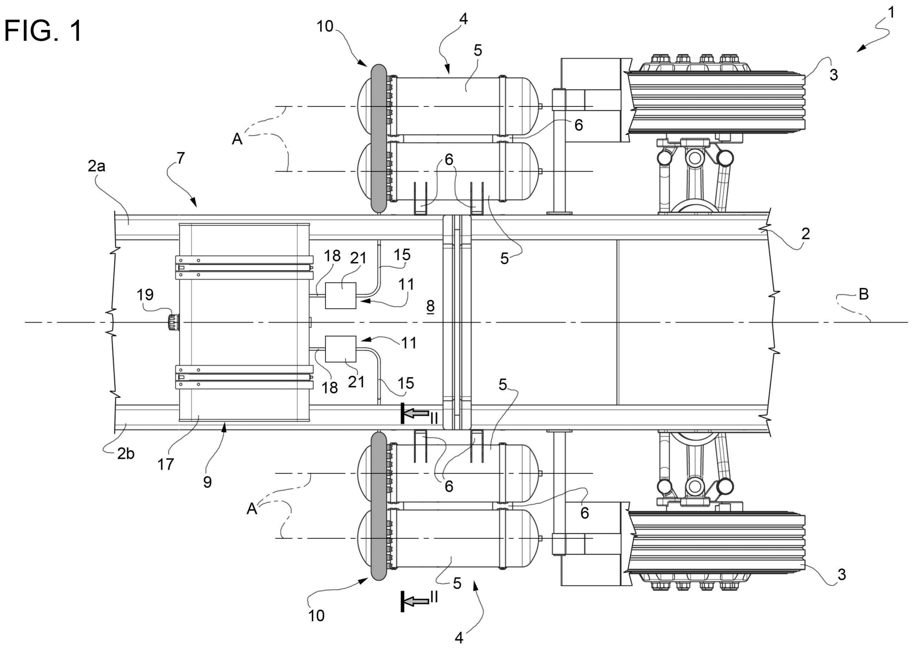

As seen in Figure 1, the source of cooling fluid 9 essentially comprises a canister 17, or tank, configured to house the cooling fluid of a volume sufficient to provide at least 10-15 minutes of operation of the emergency system without the need for supply from an external water source attached to the frame 2. In the case described, the canister 17 is attached to both side members 2a, 2b of the frame 2.

Advantageously, the canister 17 is provided with a fluid level sensor to detect the amount of cooling fluid in the canister 17 itself.

The canister 17 is connected via a pipe 18 to the pumping means 11 and advantageously comprises a hydraulic interface 19 configured to enable a pipe, for example a pipe provided by a fire brigade, to be connected to make it possible to fill the canister 17.

The pumping means 11 comprise an electric pump 21, configured to draw fluid from the pipe 18, pressurise it, and send it pressurised via the pipe 15 to the diffuser means 10.

Advantageously, the electric pump 21 is placed in the area 8 of the vehicle, or may be provided as submersible in the source 9 so as to be isolated from the external environment.

According to the illustrated embodiment, there are two electric pumps 21: a dedicated one for each storage system 4; however, it is clear that different hydraulic arrangements could be made, even ones comprising a single electric pump 21.

The electric pump 21 is electrically connected to an electronic unit of the vehicle 1, for example the ECU or an electronic unit integrated into the electric pump 21 itself, comprising processing means configured to receive as input variables defining certain operational states of the vehicle 1, to process them, and consequently to control the electric pump 21.

Advantageously, the vehicle comprises at least crash sensors, not illustrated, configured to detect a collision of the vehicle 1 leading to structural damage/deformation thereof and temperature sensor means, not illustrated, configured to detect a temperature of the area 8 of the vehicle 1. Both the crash sensors and the temperature sensor means are electrically connected to the electronic unit, preferably the ECU of the vehicle, which is configured to acquire data that they detect.

The fluid level sensor may alternatively be replaced by pressure sensor means, not illustrated, configured to detect the storage pressure of the cooling fluid within the canister 17. Advantageously, the dedicated sensor for detecting the fluid level in the canister 17 or the sensor for detecting the fluid pressure may be electrically connected to the vehicle electronic unit or to the electric pump 21 itself. All of the above electronic connections can be connected by cable or using electromagnetic waves.

Advantageously, the vehicle 1 comprises telecommunication means (not illustrated) configured to detect a condition in which the emergency system 7 is activated and to communicate essential data of the vehicle that is stored in the vehicle electronic unit, such as the position (e.g., GPS) of the vehicle, the type of vehicle, the licence plate, the presence of said emergency system, the canister level (residual volume), the time of the system's activation, etc., with one or more known rescue stations, e.g., the fire station.

These telecommunication means can be integrated into the electronic unit itself or into the electric pump and can be activated automatically, e.g., based on the change of state of a normally closed or normally open auxiliary switch.

Advantageously, the safety system 7 may also comprise bypass means (not illustrated) of the pumping means 11 configured to allow a fluid to pass from the source 9 directly to the diffuser means 10 if a malfunction of the pumping means 11 occurs.

In particular, the bypass means are configured to allow direct fluidic communication between the source 9 and diffuser means 10 when the activation conditions of the pumping means 11 are met, i.e. when a temperature above the threshold or an impact is detected, and when a malfunction is detected in the pumping means 11, such as a lack of power supply or a hydraulic or mechanical problem.

These bypass means may be connected to the electronic unit and/or the electric pump 21 and activated if this malfunction is detected.

According to a preferred embodiment, these bypass means may comprise a solenoid valve, fluidically placed in parallel with the electric pump 21, normally closed and configured to open if the above conditions are met.

In this case, clearly, it will be necessary to provide for inserting fluid into the canister 17, for example by means of the pipe connected to the interface 19, in order to provide adequate delivery pressure for the fluid to reach the diffuser means 10.

The operation of the embodiment of the emergency system 7 described above is the following.

If the electronic unit detects the presence of an impact or an increase in temperature above a predetermined threshold stored and calibrated in the area 8, for example 100 °C, provided that there is sufficient cooling fluid whose quantity is detected by the fluid level sensor in the canister 17, then the electric pump 21 is activated sucking fluid from the canister 17, pressurising it, and sending it to the diffuser means 10 that will create a fire shield around the tanks 5, as well as cooling them. The fire shield will be particularly effective due to the arrangement of the openings 13 and nozzles 16.

If there is insufficient fluid within the canister 17, it is possible to allow continuous operation of this fire shield as long as it is required by connecting a rescue pipe via the interface 19.

If there is no fluid in the canister 17 or at least one of the above conditions (impact or temperature) is not met, then the electric pump 21 will not be activated.

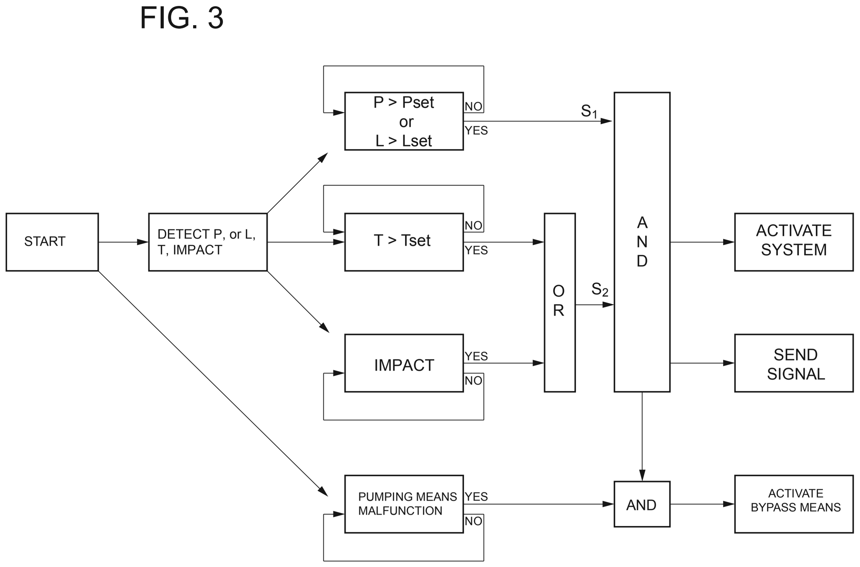

According to what has been illustrated, the invention also relates to a cooling method for a storage system 4 for liquid fuel, using a system as described above and illustrated for clarity in Figure 3.

In particular, this method essentially comprises the steps of:
- detecting a temperature T of an area 8 of the vehicle 1, the pressure P of the cooling fluid of the source 9 (or alternatively detecting the fluid level in the canister 17) and an impact (crash) of the vehicle 1;
- if there is a pressure P greater than a threshold pressure Pset, or, alternatively, if the fluid level L is greater than a threshold Lset, sending an enabling signal S1 to enable the pumping means 11;

- if there is either a temperature T greater than a threshold temperature Tset or an impact, sending an enabling signal S2 to enable the pumping means 11;
- if both enabling signals S1, S2 are present, then activating the pumping means 11 to generate a shield of fluid around the storage system 4.

The method may also comprise the additional step of:
- if both enabling signals S1, S2 are present, sending an information signal to an emergency station.
The method may also comprise the additional step of:
- if both enabling signals S1, S2 are present and there is a signal detecting a malfunction in the pumping means 11, bypassing the pumping means 11 themselves by fluidically connecting the source 9 directly to the diffuser means 10.

The advantages of an emergency system 7 according to this invention are clear from the above.

Due to the emergency system 7, it is possible to protect the storage system 4 of the vehicle 1 preventing it from overheating, which could lead to its explosion due to the increase of pressure inside it, which is slowed down.

In particular, the use of the emergency system 7 described enables the creation of a shield of fluid that cools at the same time and prevents heat transmission over the whole storage system 4 assembly.

In particular, the activation of the system is automatic and can be carried out on the basis of different data coming from various sensors, according to the vehicle type.

Again, the use of the diffuser means 10 enables a shield of fluid to be generated on different-sized tanks in different arrangements.

Advantageously, the use of flat-jet nozzles 16, particularly arranged on the sides of the tanks 5, makes it possible to generate a particularly effective shield of fluid to isolate the tanks 5 from the outside and the inside of the vehicle itself, i.e., from the possible transmission of heat from external elements or from internal parts of the vehicle 1.

The automatic control logic described is particularly effective in activating the emergency system 7 if there is at least one potential cause of tank explosion 5.

The use of a hydraulic interface 19 integrated in the canister 17 defining the source 9 also makes it possible to continue generating this shield of fluid if the fluid contained in the canister 17 itself is exhausted.

In particular, the additional presence of the bypass means together with the hydraulic interface 19 makes it possible to use the emergency system 7 in case the pumping means 11 are not working or there is a power supply problem.

The use of submersible pumping means 11 makes their operation even safer against a possible fire or due to impacts from a vehicle accident.

Finally, it is clear that the emergency system 7 according to this invention can be modified and variations can be made without departing from the scope of protection as set forth in the claims.

It is clear, as mentioned in the description, that the number of storage systems 4, of tanks 5, may vary in number and shape.

Also, the shape and number of the diffuser means as well as the pumping means 11 or the source of cooling fluid, may be varied according to the type and size of the vehicle on which the emergency system as claimed is present.

Again, as is clear, the hydraulic arrangement of the pumping means 11 may vary depending on their type, submersible or not, or the hydraulic arrangement connecting the source 9 to the diffuser means 10 may vary.

## Claims

1. Vehicle (1) comprising a frame (2) carried movable with respect to the ground through a plurality of wheels (3) and provided with at least a storage system (4) for a gas suitable for being used by a propulsion system of the vehicle (1) to allow its movement,
said vehicle comprising an emergency system (7) comprising a source (9) of cooling fluid, diffuser means (10) and pumping means (11), the latter being fluidly interposed between said source (9) said diffuser means (10) and being configured to pump said fluid from said source (9) and send it, pressurized, to said diffuser means (10),
said diffuser means (10) being configured to generate a shield of cooling fluid around said storage system (4),
said pumping means (11) automatically activates if there is a temperature rise in a predetermined area (8) of said vehicle greater than a threshold temperature and / or an impact of said vehicle (1) is detected,
further comprising bypass means, fluidly placed in parallel with said pumping means (11) and configured to fluidly connect said source (9) to said diffuser means (10), if a malfunction in said pumping means (11) is detected.

2. Vehicle (1) according to claim 1, wherein said pumping means (11) comprise at least one electric pump (21).

3. Vehicle according to claim 1 or 2, wherein said diffuser means (10) comprise an annular element (12) configured to surround said storage system (4), said annular element (12) defining a plurality of openings (13) suitable for allowing the outflow of said pressurized fluid coming from said pumping means (11) towards said storage system (4).

4. Vehicle according to claim 3, wherein said annular element (12) comprises a single hollow body defining said openings (13).

5. Vehicle according to claim 3 or 4, wherein said annular element (12) is placed at a longitudinal end of said storage system (4) with respect to a longitudinal axis (A) of the latter, said openings being defined on the same side of said annular element (12) facing the opposite end of said storage system (4).

6. Vehicle according to one of claims 3 to 5, wherein said diffuser means (10) comprise nozzles (16) housed in said openings (13).

7. Vehicle according to claim 6, wherein said nozzles (16) are of the flat jet type, the jet of each nozzle being parallel to a longitudinal plane (α) of said storage system (4).

8. Vehicle according to claim 6 or 7, wherein said nozzles (16) are placed circumferentially around said storage assembly (4) and are circumferentially angularly closer together in lateral portions of said annular elements (12) with respect to axial portions of said annular element (12).

9. Vehicle according to one of the preceding claims, wherein said storage system (4) comprises at least one tank (5).

10. Vehicle according to one of the preceding claims, wherein said source (9) comprises at least one canister (17).

11. Vehicle according to claim 10, wherein said canister (17) comprises a hydraulic interface (19) configured to allow connection with a pipe to fill said canister (17).

12. Vehicle according to one of claims 10 or 11, wherein said electric pump (21) is submersible in said canister (17).

13. Vehicle according to one of the preceding claims, comprising an electronic unit, temperature sensor means in said area (8) and impact sensor means, said electronic unit being electronically connected to said pumping means (11) and said sensor means of temperature and impact and comprising processing means configured to process the signals detected by said sensor means for controlling said pumping means (11).

14. Vehicle according to claim 13, further comprising sensor means for detecting the pressure or level of said fluid in said source (9), said electronic unit being electronically connected to at least one of said sensor means and processing the signal detected by them for controlling said pumping means (11).

15. Vehicle according to claim any of the preceding claims, wherein said by-pass means comprise a solenoid valve placed in parallel with said pumping means (11), normally closed when said pumping means (11) do not present operating anomalies.

16. Vehicle according to one of the preceding claims, comprising telecommunication means configured to send a signal to a remote emergency station if said pumping means (11) are activated.

17. System comprising a remote emergency station and a vehicle (1) according to one of claims 1 to 15, said vehicle (1) and said remote emergency station comprising telecommunication means configured to allow signalling from said vehicle (1) to the remote emergency station in order to communicate that said pumping means (11) have been activated.

18. A cooling method of a vehicle (1) storage system (4) according to one of claims 1 to 15 comprising the steps of:
• detecting a temperature (T) of an area (8) of the vehicle, of the pressure (P) or of the level (L) of the cooling fluid of said source (9) and of an impact, crash, of the vehicle (1);
• if there is a fluid level (L) greater than a threshold level (Lset) or if there is a pressure (P) greater than a threshold pressure (Pset), send an enabling signal (S1) of the pumping means (11);
• if there is either a temperature (T) higher than a threshold temperature (Tset) or an impact, send an enabling signal (S2) of the pumping means (11);
• if both the enabling signals (S1, S2) are present, then activate the pumping means (11) to generate a shield of fluid around said storage system (4).
wherein
• if both the enabling signals S1, S2 are present, and a relevant signal is present, indicating an operating anomaly of the said pumping means (11), bypass said pumping means (11) by fluidly connecting said source (9) to said diffuser means (10).

19. Method according to claim 18 comprising the additional step of:
• send an information signal to an emergency station, if both said enabling signals are present (S1, S2).
